# EUROPEAN PATENT SPECIFICATION

(11) **EP 2 028 430 B1**
(45) Date of publication and mention of the grant of the patent: **13.06.2012**
(21) Application number: 07742269.9
(22) Date of filing: 24.04.2007
(51) Int. Cl.: F25J 1/02, C01B 3/00, C10L 7/00

(54) **LOW-TEMPERATURE-SLUSH-FLUID PRODUCING APPARATUS**
APPARAT ZUR HERSTELLUNG VON TIEFTEMPERATUR SLUSH-FLÜSSIGKEITSGEMISCHEN
APPAREIL DE PRODUCTION DE FLUIDE PÂTEUX À BASSE TEMPÉRATURE

(30) Priority: 13.06.2006 JP 2006163661
(43) Date of publication of application: 25.02.2009
(73) Proprietor: Mitsubishi Heavy Industries, Ltd., Minato-ku Tokyo 108-8215 (JP)
(72) Inventor: KAMIYA, Takanobu, Nagoya-shi, Aichi 4558515 (JP); MAEMURA, Takashi, Nagoya-shi, Aichi 455-8515 (JP); NAKAMURA, Ryo, Nagoya-shi, Aichi 455-8515 (JP); NAKAMICHI, Kenji, Nagasaki-shi, Nagasaki 851-0392 (JP); KIMURA, Seiichiro, Nagasaki-shi, Nagasaki 851-0392 (JP); KAWASAKI, Shuichi, Aichi 455-8515 (JP)
(74) Representative: Henkel, Breuer & Partner
(86) International application number: PCT/JP2007/058834
(87) International publication number: WO 2007/145029

(56) References cited:
- JP-A- 08 283 001
- JP-A- 08 285 420
- JP-A- 10 332 261
- JP-A- 11 304 682
- JP-A- 2007 176 727
- US-A- 3 521 457
- US-A- 3 521 458

## Description

### Technical Field

The present invention relates to a low-temperature-slush-fluid producing apparatus according to the preamble portion of claim 1 for producing a low-temperature slush fluid (for example, slush hydrogen (a sorbet-like mixture of solid hydrogen and liquid hydrogen that has a higher density and therefore a larger stored cooling capacity than liquid hydrogen)).

### Background Art

One conventionally known apparatus for producing slush hydrogen is disclosed in
D. E. Daney, "HYDROGEN SLUSH PRODUCTION WITH A LARGE AUGER" (U.S.), Advanced in Cryogenic Engineering, Vol. 35

### Disclosure of Invention

The slush-hydrogen producing apparatus disclosed in the Document above, however, has limited capability in terms of reducing the particle size of solidified hydrogen; it has a problem in that the weight solidification rate of slush hydrogen (the proportion by weight of solidified hydrogen in liquid hydrogen) cannot be satisfactorily increased.

A low-temperature-slush-fluid providing apparatus with the features of the preamble portion of claim 1 is disclosed in US 3 521 458 A.

An object of the present invention, which has been made in light of the above circumstances, is to provide a low-temperature-slush-fluid producing apparatus capable of achieving an increased weight solidification rate of slush fluid.

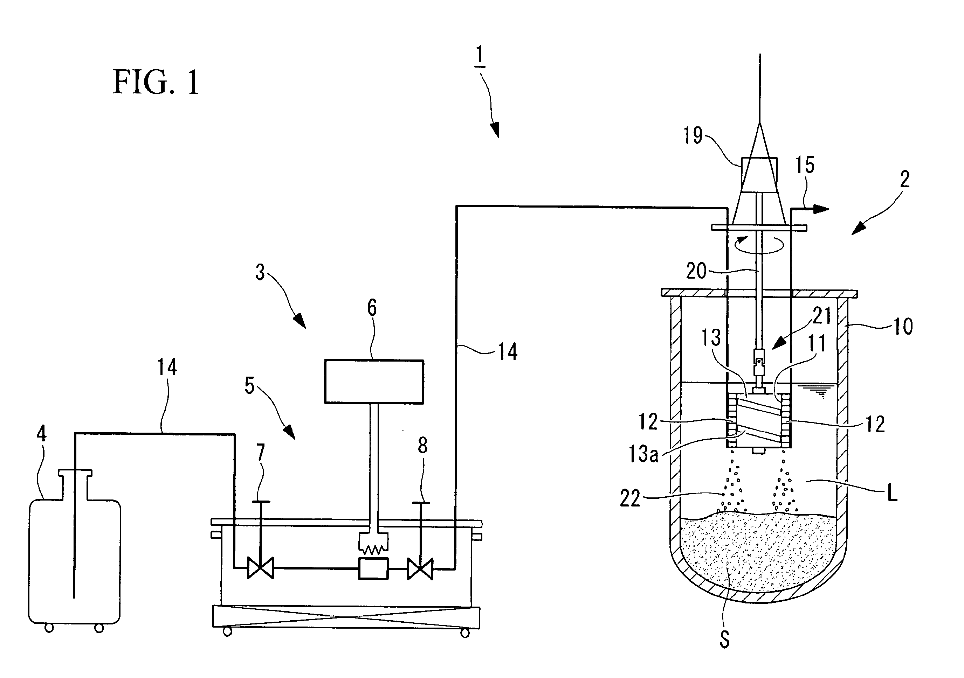

To solve the above problem, the present invention employs a low-temperature-slush-fluid producing apparatus according to claim 1.
In this low-temperature-slush-fluid producing apparatus, for example, as shown in Fig. 1, the particle size of particles 22 of a low-temperature fluid L scraped by a blade 13a of an auger (scraping means) 13 can be reduced (finer particles can be formed) by adjusting (controlling) the amount of heat generated by a heater 6, the degree of valve opening of a first valve 7, the degree of valve opening of a second valve 8, and the rotational speed of a drive motor 19, thereby increasing the weight solidification rate of slush fluid.
In addition, if such a slush fluid (slush hydrogen with an increased weight solidification rate) is charged (supplied) into, for example, a vehicle hydrogen storage tank installed in a vehicle that runs on hydrogen as a fuel, such as a fuel-cell powered vehicle or a hydrogen-fueled vehicle, it is possible to reduce evaporation of hydrogen in the vehicle hydrogen storage tank and to improve the utilization efficiency of hydrogen.

In the above low-temperature-slush-fluid producing apparatus, the scraping means is an auger, and a central shaft of the auger is connected to a drive shaft of a drive motor for driving the auger via a universal joint.
In such a low-temperature-slush-fluid producing apparatus, because heat transferred from the drive shaft of the drive motor to the central shaft of the auger is significantly reduced at the universal joint, it is possible to reduce heat intruding from the drive shaft of the drive motor into the central shaft of the auger.

In the above low-temperature-slush-fluid producing apparatus, preferably, the auger is configured so as to be rotatable relative to the heat-transfer surface, and both ends of a rotating shaft of the auger are borne by bearings.
In such a low-temperature-slush-fluid producing apparatus, the auger can be rotated in a stable manner, so that the particle size of the particles of the low-temperature fluid scraped by the auger can be kept substantially constant, and the production efficiency of the slush fluid can be improved.

A low-temperature-slush-fluid storing facility includes the above low-temperature-slush-fluid producing apparatus; transferring means for transferring a low-temperature slush fluid accumulated on the bottom of the container to another place; and a low-temperature-slush-fluid storing tank for storing the low-temperature slush fluid transferred by the transferring means.
This low-temperature-slush-fluid storing facility allows the low-temperature-slush-fluid storing tank to be filled with a low-temperature slush fluid with a high weight solidification rate, thus reducing vaporization (boil-off) of the low-temperature slush fluid stored in the low-temperature-slush-fluid storing tank.

More preferably, the above low-temperature-slush-fluid storing facility is configured so that the low-temperature slush fluid stored in the low-temperature-slush-fluid storing tank has a desired weight solidification rate.
In such a low-temperature-slush-fluid storing facility, for example, the particle size of the particles of the low-temperature fluid produced by the slush-fluid producing unit or the proportion of the low-temperature slush fluid transferred by the transferring means to the liquid-phase low-temperature fluid are adjusted so that the low-temperature slush fluid stored in the low-temperature-slush-fluid storing tank has a desired weight solidification rate.
This reduces the vaporization (boil-off) of the low-temperature slush fluid stored in the low-temperature-slush-fluid storing tank, thus prolonging the storage period.

The present invention provides the advantage of increasing the weight solidification rate of slush fluid.

### Brief Description of Drawings

[FIG. 1] Fig. 1 is a schematic structural diagram of an embodiment of a low-temperature-slush-fluid producing apparatus according to the present invention, showing the entire production apparatus.
[FIG. 2] Fig. 2 is an enlarged sectional view of a relevant part of the low-temperature-slush-fluid producing apparatus shown in Fig. 1.

### Explanation of Reference Signs:

- 1:: low-temperature-slush-fluid producing apparatus
- 2:: slush-fluid producing unit
- 3:: cryogenic-fluid generating unit
- 10:: container
- 11:: heat-transfer surface
- 12:: heat exchanger
- 13:: auger (scraping means)
- 16:: rotating shaft (central shaft)
- 17:: bearing
- 18:: bearing
- 19:: drive motor
- 20:: drive shaft
- 21:: universal joint
- L:: liquid-phase low-temperature fluid
- S:: low-temperature slush fluid

### Best Mode for Carrying Out the Invention

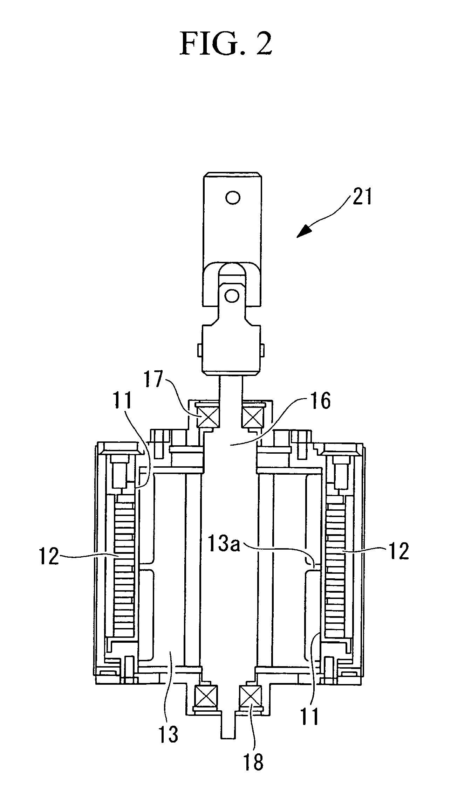

An embodiment of a low-temperature-slush-fluid producing apparatus (hereinafter referred to as a "production apparatus") according to the present invention will now be described with reference to Figs. 1 and 2.
Fig. 1 is a schematic structural diagram of an entire production apparatus 1 according to this embodiment. As shown in Fig. 1, the production apparatus 1 includes, as main components, a slush-fluid producing unit 2 for producing a low-temperature slush fluid (for example, slush hydrogen) and a cryogenic-fluid generating unit 3 for generating a cryogenic fluid (for example, gaseous helium at 13 K) to be supplied to the slush-fluid producing unit 2. Fig. 2 is an enlarged sectional view of a relevant part of the slush-fluid producing unit 2.

The cryogenic-fluid generating unit 3 includes a cryogenic-fluid storing tank 4 and a flow-rate/temperature adjusting unit 5.
The cryogenic-fluid storing tank 4 stores a liquid-phase cryogenic fluid (for example, liquid helium at 4 K). The cryogenic-fluid storing tank 4 is connected (coupled) to a heat exchanger 12 of the slush-fluid producing unit 2 through a cryogenic-fluid supplying pipe 14.
The flow-rate/temperature adjusting unit 5 includes a heater 6 disposed somewhere along the cryogenic-fluid supplying pipe 14 to heat and gasify (vaporize) the liquid-phase cryogenic fluid supplied (pumped) from the cryogenic-fluid storing tank 4; a first valve 7 disposed in the cryogenic-fluid supplying pipe 14 upstream of the heater 6 to adjust the flow rate of the liquefied cryogenic fluid flowing from the cryogenic-fluid storing tank 4 to the heater 6; and a second valve 8 disposed in the cryogenic-fluid supplying pipe 14 downstream of the heater 6 to adjust the flow rate of a gaseous cryogenic fluid (for example, gaseous helium at 13 K) flowing from the heater 6 to the heat exchanger 12 of the slush-fluid producing unit 2.

The slush-fluid producing unit 2 includes a container 10 storing a liquid-phase low-temperature fluid (for example, liquid hydrogen at 13.8 K) L; the heat exchanger 12, which is disposed inside the container 10 and has a cylindrical heat-transfer surface 11; and an auger (scraping means) 13 for scraping (shaving) a solid-phase low-temperature fluid (for example, solid hydrogen), though not shown, formed on the surface of the heat-transfer surface 11.

The container 10 is accommodated in a thermally insulated vacuum vessel (not shown) in which a vacuum is maintained and which has a radiation-shielding plate (not shown), such as a copper plate, laminated on the inner surface thereof, so that heat intruding from the outside of the container 10 into the inside thereof can be reduced.

The cryogenic fluid (fluid having a lower temperature than the liquid-phase low-temperature fluid L stored in the container 10) generated by the cryogenic-fluid generating unit 3 is supplied into the heat exchanger 12. After the cryogenic fluid supplied into the heat exchanger 12 forms a solid-phase low-temperature fluid L on the surface of the heat-transfer surface 11 through heat exchange with the liquid-phase low-temperature fluid L stored in the container 10, the cryogenic fluid is temporarily stored in a storage tank (not shown) through a cryogenic-fluid return pipe 15, is liquefied by a liquefying unit (not shown), and is returned to the cryogenic-fluid storing tank 4 of the cryogenic-fluid generating unit 3.

Referring to Fig. 2, the auger 13 is a cylindrical member that includes a rotating shaft (central shaft) 16 whose ends are borne by bearings 17 and 18 and that is accommodated so as to be rotatable along the heat-transfer surface 11, having a blade 13a formed on the outer circumferential surface thereof (that is, the surface opposite the heat-transfer surface 11) spirally in the longitudinal direction.
In addition, the rotating shaft 16 is connected (coupled) to a drive shaft 20 (see Fig. 1) extending from a drive motor 19 (see Fig. 1) via a universal joint 21 so that, as the drive motor 19 rotates, the auger 13 rotates similarly along with that rotation (in the direction indicated by the arrow in Fig. 1 (clockwise as viewed from the top of Fig. 1)). The blade 13a of the auger 13 scrapes the solid-phase low-temperature fluid formed on the heat-transfer surface 11 to form particles 22 of the low-temperature fluid L (for example, particles of solid hydrogen), which fall onto the bottom of the container 10 and form a slush fluid (for example, slush hydrogen) S.
In addition, the heater 6, the first valve 7, the second valve 8, and the drive motor 19 are connected to a controller, though not shown, that controls the particle size of the particles 22 of the low-temperature fluid L (for example, particles of solid hydrogen) scraped by the blade 13a of the auger 13 to a desired size (for example, 1 to 10 µm).

In the production apparatus 1 according to this embodiment, the particle size of the particles 22 of the low-temperature fluid L scraped by the blade 13a of the auger 13 can be reduced (finer particles can be formed) by adjusting (controlling) the amount of heat generated by the heater 6, the degree of valve opening of the first valve 7, the degree of valve opening of the second valve 8, and the rotational speed of the drive motor 19, thereby increasing the weight solidification rate (solidification rate) of the slush fluid.
In addition, if such a slush fluid (slush hydrogen with an increased weight solidification rate) is charged (supplied) into, for example, a vehicle hydrogen storage tank installed in a vehicle that runs on hydrogen as a fuel, such as a fuel-cell powered vehicle or a hydrogen-fueled vehicle, it is possible to reduce evaporation of hydrogen in the vehicle hydrogen storage tank and to improve the utilization efficiency of hydrogen.

In addition, because the rotating shaft 16 of the auger 13 is connected (coupled) to the drive shaft 20 extending from the drive motor 19 via the universal joint 21, heat transferred from the drive shaft 20 extending from the drive motor 19 to the rotating shaft 16 of the auger 13 can be significantly reduced at the universal joint 21. This reduces the heat transferred from the drive motor 19 and the drive shaft 20 to the rotating shaft 16 and the auger 13.

In addition, because both ends of the rotating shaft 16 of the auger 13 are borne by the bearings 17 and 18, the auger 13 can be rotated in a stable manner, so that the particle size of the particles 22 of the low-temperature fluid L scraped by the blade 13a of the auger 13 can be kept substantially constant, and the production efficiency of the slush fluid can be improved.

Although the amount of heat generated by the heater 6, the degree of valve opening of the first valve 7, the degree of valve opening of the second valve 8, and the rotational speed of the drive motor 19 are adjusted (controlled) by the controller in the above embodiment, the present invention is not limited thereto; these adjustments may be manually performed.

In addition, although the auger 13 described in the above embodiment is configured so as to be rotatable along the heat-transfer surface 11, the present invention is not limited thereto; the auger 13 may be configured so as to be reciprocatable along the heat-transfer surface 11, that is, may be equipped with a reciprocating actuator or an ultrasonic vibrator instead of the drive motor 19.

More preferably, further provided is transferring means (not shown) for transferring the low-temperature slush fluid accumulated on the bottom of the container 10 to another place and a low-temperature-slush-fluid storing tank (not shown) for storing the low-temperature slush fluid transferred by the transferring means.
This allows the low-temperature-slush-fluid storing tank to be filled with a low-temperature slush fluid with a high weight solidification rate, thus reducing vaporization (boil-off) of the low-temperature slush fluid stored in the low-temperature-slush-fluid storing tank.

In a more preferable configuration, the low-temperature slush fluid stored in the low-temperature-slush-fluid storing tank has a desired weight solidification rate. This can be accomplished by adjusting the particle size of the particles 22 of the low-temperature fluid L produced by the slush-fluid producing unit 2 or by adjusting the proportion of the slush fluid S transferred by the transferring means to the liquid-phase low-temperature fluid L.
This reduces the vaporization (boil-off) of the low-temperature slush fluid stored in the low-temperature-slush-fluid storing tank, thus prolonging the storage period.

In addition, the term "low temperature" used in the present specification refers to -273 °C to minus several tens of degrees Celsius.

## Claims

1. A low-temperature-slush-fluid producing apparatus comprising:
a slush-fluid producing unit (2) that includes a heat exchanger (12) having a heat-transfer surface (11) and disposed in a liquid-phase low-temperature fluid (L) stored in a container (10), and scraping means (13) for scraping a solid-phase low-temperature fluid formed on a surface of the heat-transfer surface (11); and
a cryogenic-fluid generating unit (3) for supplying into the heat exchanger (12) a cryogenic fluid having a lower temperature than the liquid-phase low-temperature fluid (L) stored in the container (10);
wherein "low-temperature" refers to a temperature in the range from -273° degrees Celsius to minus several tens of degrees Celsius,
wherein the apparatus is configured so that the flow rate and temperature of the cryogenic fluid flowing into the heat exchanger (12) and a rotational speed or a reciprocating speed of the scraping means (13) can be adjusted based on the particle size of the particles (22) of the solid-phase low-temperature fluid scraped by the scraping means (13), and
wherein the scraping means is an auger (13) and a central shaft of the auger (13) is connected to a drive shaft (20) of a drive motor (19) for driving the auger (13), **characterized in that**
the central shaft of the auger (13) is connected to the drive shaft (20) of the drive motor (19) for driving the auger (13) via an universal joint (21).

2. The low-temperature-slush-fluid producing apparatus according to claim 1, wherein the auger (13) is configured so as to be rotatable relative to the heat-transfer surface (11), and both ends of a rotating shaft (16) of the auger (13) are borne by bearings (17,18).

## Patentansprüche

1. Ein Apparat zum Herstellen eines Tieftemperatur-Slush-Fluidgemisches mit:
einer Einheit zum Herstellen eines Slush-Fluidgemisches (2), die einen Wärmetauscher (12), der eine Wärmerübertragungsoberfläche (11) aufweist und in einem Tieftemperaturfluid in flüssiger Phase (L) angeordnet ist, welches in einem Behälter (10) aufgenommen ist, sowie Schabermittel (13) zum Abschaben eines Tieftemperaturfluides in fester Phase, das an einer Oberfläche der Wärmeübertragungsoberfläche (11) gebildet ist, enthält, und
einer Einheit zum Erzeugen eines cryogenen Fluides (3) zum Zuführen eines cryogenen Fluides mit einer niedrigeren Temperatur als der des Tieftemperaturfluides in flüssiger Phase (L), das in dem Behälter (10) aufgenommen ist, in den Wärmetauscher (12),
wobei "Tieftemperatur" sich auf eine Temperatur in dem Bereich von -273°C bis minus einigen zehn Grad Celsius bezieht,
wobei der Apparat so konfiguriert ist, dass die Strömungsrate und Temperatur des cryogenen Fluides, das in den Wärmetauscher (12) strömt, und eine Drehgeschwindigkeit oder eine Hin- und Herbewegungsgeschwindigkeit des Schabermittels (13) basierend auf der Teilchengröße der Teilchen (22) des Tieftemperaturfluides in fester Phase, das von dem Schabermittel (13) abgeschabt wird, eingestellt werden kann, und
wobei das Schabermittel eine Schnecke (13) ist und eine Mittelachse der Schnecke (13) mit einer Antriebswelle (20) eines Antriebsmotors (19) zum Antreiben der Schnecke (13) verbunden ist,
**dadurch gekennzeichnet, dass**
die Mittelachse der Schnecke (13) mit der Antriebswelle (20) des Antriebsmotors (19) zum Antreiben der Schnecke (13) über ein Universal- bzw. Kreuzgelenk (21) verbunden ist.

2. Der Apparat zum Herstellen eines Tieftemperatur-Slush-Fluidgemisches gemäß Anspruch 1, wobei die Schnecke (13) so konfiguriert ist, dass sie relativ zu der Wärmeübertragungsoberfläche (11) drehbar ist, und beide Enden einer Drehachse (16) der Schnecke (13) in Lagern (17, 18) aufgenommen sind.

## Revendications

1. Appareil de production de fluide pâteux à basse température comprenant :
une unité de production de fluide pâteux (2) qui inclut un échangeur de chaleur (12) ayant une surface de transfert de chaleur (11) et disposé dans un fluide à basse température en phase liquide (L) stocké dans un récipient (10), et un moyen de raclage (13) permettant de racler un fluide à basse température en phase solide formé sur une surface de la surface de transfert chaleur (11) ; et
une unité de génération de fluide cryogénique (3) permettant de fournir dans l'échangeur de chaleur (12) un fluide cryogénique ayant une température plus basse que le fluide à basse température en phase liquide (L) stocké dans le récipient (10) ;
où « basse température » se réfère à une température dans la plage de -273 degrés Celsius à moins plusieurs dizaines de degrés Celsius,
où l'appareil est configuré de telle sorte que le débit et la température du fluide cryogénique circulant dans l'échangeur de chaleur (12), et une vitesse de rotation ou une vitesse de va-et-vient du moyen de raclage (13), puissent être ajustés en se basant sur la taille de particule des particules (22) du fluide à basse température en phase solide raclé par le moyen de raclage (13), et
où le moyen de raclage est une vrille (13) et un arbre central de la vrille (13) est raccordé à un arbre d'entraînement (20) d'un moteur d'entraînement (19) permettant d'entraîner la vrille (13),
**caractérisé en ce que**
l'arbre central de la vrille (13) est raccordé à l'arbre d'entraînement (20) du moteur d'entraînement (19) permettant d'entraîner la vrille (13) via un joint de cardan (21).

2. Appareil de production de fluide pâteux à basse température selon la revendication 1, dans lequel la vrille (13) est configurée de façon à pouvoir tourner par rapport à la surface de transfert de chaleur (11), et les deux extrémités d'un arbre rotatif (16) de la vrille (13) sont portées par des paliers (17, 18).
